# EUROPEAN PATENT APPLICATION

(11) **EP 3 932 867 A1**
(43) Date of publication of application: **05.01.2022**
(21) Application number: 20182906.6
(22) Date of filing: 29.06.2020
(51) Int. Cl.: C01G 1/00

(54) **PRODUCTION OF LIGNIN OIL WITH AN ORGANIC SOLVENT**

(71) Applicant: SCA Forest Products AB, 85188 Sundsvall (SE)
(72) Inventor: KUMAR, Shushil, Roorkee 247667 (IN); KUGGE, Christian, 85236 Sundsvall (SE)
(74) Representative: Weickmann & Weickmann PartmbB

(57) **Abstract**

The present invention relates to a process for producing bio oil comprising depolymerized lignin from a lignin-containing composition and an organic solvent.

## Description

The present invention relates to a process for producing bio-oil comprising depolymerized lignin wherein the depolymerization of lignin is carried out in the presence of an organic solvent.

Lignin is one of the two major components of lignocellulose in plants. Structurally it is a class of complex cross-linked phenolic polymers. From an energy point of view, lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

There is, however, still a need to provide improved processes for the production of a bio-oil comprising depolymerized lignin improved efficacy and/or economic feasibility compared to known processes.

### Summary of the invention

The present invention provides a novel process for producing bio-oil from a lignin-containing starting material with an organic solvent. This novel process has an improved efficacy and/or economic feasibility compared to known processes.

The inventors have found that the presence of an organic solvent in the process leads to a more efficient depolymerization of lignin wherein an oil-phase comprising a substantial amount of the depolymerized lignin is formed.

Further, the inventors have observed that in the presence of an organic solvent in the process with black liquor as starting material the low alkali conditions in combination with a high temperature during the depolymerization step lead to a reduced char formation thereby increasing the viability of the catalysts and of the reactor used in the process.

The present inventors have also found that the presence of CO and particularly of a gas mixture comprising H₂ and CO during the depolymerization step leads to an acidification of the reaction mixture thereby increasing the protonation of lignin and depolymerization products and thereby increasing the amount of depolymerized lignin in the oil-phase. Thus, the presence of CO or of a CO containing gas mixture leads to reduced costs and/or increased efficiency compared to known processes of producing bio-oil since no additional acidification step is required.

A first aspect of the invention relates to a process for producing bio-oil comprising the steps of:
(a) providing a lignin-containing composition having an alkaline pH, e.g. a pH of about pH 8 to about pH 14 and providing an organic solvent,
(b) passing the lignin-containing composition of step (a) through a reactor under conditions of elevated temperature and elevated pressure optionally in the presence of a gas, preferably in the presence of a gas selected from H₂, CO, CO₂, H₂S, syngas, mercaptans such as methanethiol, dimethyl sulfide, dimethyl disulfide, SO₂, methane, ethane, propane, butane and any mixture thereof, thereby causing depolymerization of the lignin, wherein a bio-oil composition comprising depolymerized lignin and the organic solvent is obtained wherein the organic solvent provided in step (a) is added in step (a) and/or in step (b),
(c) optionally cooling the bio-oil composition and removing gaseous components therefrom,
(d) optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and the organic solvent and optionally the organic extracting agent,
(g) optionally desalting the oil phase,
(h) optionally adding an organic diluent and/or optionally adding a mixture of an alcohol and an azeotrope-forming agent to the oil phase,
(i) evaporating or distilling at least a part of the organic solvent comprised in the oil phase and optionally evaporating the organic extracting agent comprised in the oil phase, and
(j) obtaining a bio-oil comprising depolymerized lignin.

A second aspect of the invention relates to a process for producing bio-oil comprising the steps of:
(a) providing a lignin-containing composition having an alkaline pH, e.g. a pH of about 8 to about 14 and providing an organic solvent,
(b) passing the lignin-containing composition of step (a) through a reactor under conditions of elevated temperature and elevated pressure in the presence of a gas comprising CO, preferably in the presence of a gas mixture comprising CO and H₂, thereby causing depolymerization of the lignin, wherein a bio-oil composition comprising depolymerized lignin and the organic solvent is obtained wherein the organic solvent provided in step (a) is added in step (a) and/or in step (b),
(c) optionally cooling the bio-oil composition and removing gaseous components therefrom,
(d) optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and the organic solvent and optionally the organic extracting agent,
(g) optionally desalting the oil phase,
(h) optionally adding an organic diluent and/or optionally adding a mixture of an alcohol and an azeotrope-forming agent to the oil phase,
(i) evaporating or distilling at least a part of the organic solvent comprised in the oil phase and optionally evaporating the organic extracting agent comprised in the oil phase, and
(j) obtaining a bio-oil comprising depolymerized lignin.

According to the present invention, it is contemplated that the optional steps (c), (d), (e), (g) or (h) in the processes of the invention can be individually, all or in any combination of two, three or four steps combined with the characterizing steps (a), (b), (f), (i) and (j).

### Detailed description

The present invention relates to the production of a bio-oil comprising depolymerized lignin.

According to step (a) of the first and second aspect of the invention as described above a starting material is provided which is a lignin-containing composition having an alkaline pH, e.g. a pH of about 8 to about 14, a pH of about 9 to about 14 or a pH of about 12 to about 14.

The pH of the starting material might be adjusted by adding a pH-adjusting agent such as an acid or a base. Preferred pH adjusting agents are bases such as NaOH or KOH.

The lignin-containing composition may be any suitable lignin-containing composition, e.g. a lignin containing composition resulting from a pulp making process, particularly a black liquor composition, e.g. a kraft black liquor composition, i.e. a black liquor composition from a kraft pulping process, sulfite pulping process, organosolv biorefinery process (treatment of lignocellulosic feedstock with an organic solvent or an aqueous organic solvent mixture, e.g. white liquor such as alkaline liquor used in the pulp mill, in order to solubilize lignin), and/or ethanol biorefinery process. In certain embodiments, the lignin-containing composition has been obtained by a sulfur-free pulping process, e.g. a soda pulping process.

The lignin-containing composition may also be derived from dissolving a dry lignin in a suitable aqueous solvent, e.g. dry lignin obtained from a lignin extraction process, e.g. the LignoBoost^{™} process (black liquor treatment with an acid and CO₂ to precipitate and dry lignin) or the LignoForce^{™} process (black liquor oxidation step converting totally reduced sulfur compounds to nonvolatile species), dry lignin from a lignin first biorefinery process and/or a dry lignin from a sugar first biorefinery process. The lignin-containing composition may also be a moist powder or slurry.

The lignin may be derived from any type of plant, e.g. hardwood, softwood, but also from an annual plant, an energy crop, a young plant or a young plant material such as straw or any combination or mixture thereof.

In certain embodiments, the lignin in the lignin-containing composition of step (a) may have a weight average molecular weight of greater than about 600 g/mol, preferably about 1.000 g/mol to about 10.000 g/mol, more preferably about 4.000 g/mol to about 8.000 g/mol.

In certain embodiments, the lignin-containing composition of step (a) may comprise about 1 weight-% to about 30 weight-% of lignin, preferably about 5 weight-% to about 20 weight-% lignin, more preferably about 15 weight-% lignin based on the total weight of the composition.

In certain embodiments, the lignin-containing composition of step (a) may have an alkali weight content of about 1 weight-% to 20 weight-% alkali, preferably about 2 weight-% to about 10 weight-% alkali, and more preferably about 5 weight-% alkali based on the total weight of the composition.

In the process of the invention, an organic solvent is provided. The organic solvent might be added to the lignin containing composition in step (a) and/or in step (b).

In certain embodiments, the organic solvent may be a polar and/or aromatic solvent, particularly a solvent which is substantially immiscible with water at a temperature of about 20°C. For example, the solvent may be selected from the group consisting of an ester, an ether, a ketone, an alcohol, a cresol, a carboxylic acid, and combinations thereof.

In certain embodiments, the weight average molecular weight of the above solvent may be up to about 2000 g/mol, preferably of about 50 g/mol to 500 g/mol more preferably about 70 g/mol to about 300 g/mol, most preferably about 80 g/mol to about 150 g/mol.

More specifically, the organic solvent may be selected from the group consisting of benzyl alcohol, butanol, cyclohexanol, phenylethanol, hexanol, heptanol, octanol, guaiacol, butanone, methyl isobutyl ketone, methyl tert-butyl ether, petroleum ether, hexane, heptane, methyl tetrahydrofuran, ethyl acetate, isopropyl acetate, turpentine, gasoline and combinations thereof. A particularly preferred organic solvent is benzyl alcohol or ethyl acetate or a mixture thereof.

Alternatively, the organic solvent may be a lignin-derived component, particularly a depolymerized lignin or a depolymerized and partially hydrotreated lignin, e.g. partly deoxygenated and partly desulfurized lignin. A preferred lignin-derived component is a partially hydrotreated bio-oil such as obtained in a process as described in PCT/EP2020/053172, preferably after step (b) of said process. The weight average molecular weight of the lignin-derived component may be about 200 g/mol to about 2000 g/mol, preferably about 300 g/mol to about 800 g/mol.

The organic solvent is typically present in the composition in an amount between about 1:10 (w/w) to about 10:1 (w/w), preferably about 1:5 (w/w) to about 5:1 (w/w), more preferably in an amount between about 1:2 (w/w) to about 2:1 (w/w) or most preferably in an amount of about 1:1 (w/w) based on the total weight of the composition.

In certain embodiments, at least one further component, i.e. a non-lignin derived component may be added to the lignin-containing composition e.g. as described in WO 2017/48163. This further component may be selected from a carbonium and/or arenium ion scavenger, a radical scavenger, or an oxygen atom transfer agent, a rosin containing oil and any combination thereof. The further component may be added in an amount of up to about 100 weight-%, particularly in an amount of about 10 weight-% to about 100 weight-%, more particularly in an amount of about 5 weight-% to about 30 weight-%, based on the Klason lignin weight content in the lignin-containing composition.

In certain embodiments, the further component may be selected from rosin containing oils, particularly tall oil and any product derived therefrom comprising rosin constituents, particularly resin acids, e.g. abietic acid and/or pimaric acid. For example, the rosin-containing oil may be selected from crude tall oil and fractions of crude tall oil such as tall oil pitch, tall oil rosin, tall oil fatty acids, crude sulphate turpentine and/or any combination thereof.

The rosin containing oil such as the tall oil, might be present in a ratio of about 0.5:1 (w/w), preferably of about 0.6:1 (w/w) or of about 0.8:1 (w/w) of the rosin containing oil to the Klason lignin content in the lignin containing composition based on the total weight of the composition.

In specific embodiments, the further component may be a carbonium and/or arenium ion scavenger or, preferably a radical scavenger. Examples of carbonium and/or arenium ion scavengers are aromatic hydrocarbons. Examples of radical scavengers are stilbenoids, such as piceatannol, methylpiceatannol or resveratrol; polysulfides or any combination thereof, preferably polysulfides. Examples of oxygen atom transfer agents are anthraquinone, a tannin, menadione, quercetin or any combination thereof. With regard to these further components, specific reference is made to WO 2017/048163 the content of which is herein incorporated by reference.

In certain embodiments, the lignin-containing composition which is provided according to step (a) and passed to the depolymerization reactor according to step (b) may have a dry solid content in the range of about 15 weight-% to about 60 weight-%, particularly of about 20 weight-% to about 50 weight-%, more particularly of about 35 weight-% to about 45 weight-%, e.g. about 40 weight-% based on the total weight of the lignin-containing composition.

Further, in certain embodiments, the lignin-containing composition which is provided according to step (a) and passed to the depolymerization reactor according to step (b) may have a Klason lignin content in the range of about 30 g/kg to about 300 g/kg, particularly of about 100 g/kg to about 200 g/kg based on the total volume of the lignin-containing composition. The Klason lignin content may be determined gravimetrically according to the SCAN-CM 71 method (Scandinavian Pulp, Paper and Board Testing Committee).

Step (b) of the process of the invention comprises passing the lignin-containing composition through a reactor under conditions of elevated temperature and elevated pressure, thereby causing depolymerization of the lignin, wherein a bio-oil composition comprising depolymerized lignin is obtained.

The reactor may be a tubular reactor with or without a packaging inside.

The reactor might be a single reactor or a plurality of reactors such as 1, 2, 3, 4 or 5 reactors. The plurality of reactors might be operated in series, e.g. by passing the whole stream of the lignin-containing composition through each of the plurality of reactors thereby increasing the quality of the resulting bio-oil. Alternatively, the plurality of reactors might be operated in parallel, e.g. by passing parts of the whole stream of the lignin-containing composition through each of the plurality of reactors thereby improving the quality, the processability and the time of the process.

The depolymerization reaction in step (b) is carried out under conditions of elevated temperature and elevated pressure, which are suitable for conducting the depolymerization reaction. The term *"elevated temperature"* relates to a temperature which is elevated compared to room temperature and the term *"elevated pressure"* relates to a pressure which is elevated compared to atmospheric pressure. Particularly, the reactor is kept at a temperature between about 150°C and about 370°C, more particularly between about 230°C and about 290°C and at a pressure between about 5 bar and about 220 bar, more particularly between about 15 bar and about 120 bar.

The depolymerization reaction in step (b) may be carried out in the presence of a gas such as H₂, CO, CO₂, H₂S, syngas, mercaptans such as methanethiol, dimethyl sulfide, dimethyl disulfide, SO₂, methane, ethane, propane, butane and any mixture thereof, particularly in the presence of a reducing gas such as CO or syngas (H₂ and CO).

According to the second aspect of the invention, the gas comprises CO, particularly at least about 20 vol.-% CO, at least about 30 vol.-% CO, or at least about 50 vol.-% CO.

In certain embodiments the gas consists of CO.

In certain embodiments the gas comprises H₂ and CO, preferably in a ratio between about 10:1 (v/v) to about 1:10 (v/v), more preferably between about 5:1 (v/v) to about 1:5 (v/v), most preferably between about 3:1 (v/v) to about 1:3 (v/v). In certain embodiments, the gas consists of H₂ and CO.

In a specific embodiment the gas comprises or consists of CO and the depolymerization of lignin in step (b) is carried out under a pressure of about 3 bar to about 200 bar, preferably about 50 bar to about 150 bar.

In a specific embodiment the depolymerization in step (b) is carried out in the presence of a first catalyst which catalyzes deoxygenation and/or cracking of lignin, e.g. a catalyst which prefers the solvent phase, e.g. a solid catalyst.

Preferably, the first catalyst may be selected from the group consisting of mesoporous carbon, hydrophobic silica, hydrophobic silica/titania mixed oxides, hydrophobic zeolite, hydrotalcite, hydroxyapatite, sepiolite and metal organic framework (MOF) doped with metals such as Ni and Mo.

In certain embodiments, a second depolymerization catalyst may be present in step (b) which is different from the first catalyst. For the depolymerization of lignin a wide range of catalysts can be used such as a noble metal on a support such as a carbon-based support, e.g. activated carbon, charcoal, graphene, carbon nanotubes, or graphite, or a metal oxide-based support such as alumina, aluminum phosphate, zeolite, hydrotalcite, hydroxyapatite, magnesium oxide, zirconia, titanium dioxide, ceria, chromite or molybdite.

Other possible catalysts are transition metals such as V, Cr, Fe, Co, Ni, Cu, Zn, Zr, Nb, Mo and W or transition metal oxides such as NiO on any of the previously mentioned supports, as well as unsupported metal, metal oxide, metal carbide or metal nitride particles wherein the metal is particularly a transition metal which is preferably doped with another transition metal such as Ni or Mo. Further unsupported catalysts that are suitable are Co-Mo-S, MoS₂, VS₂, Ni-Mo, Ni-P and Fe-Cu catalysts.

In certain embodiments, the reactor is operated in an up-flow mode comprising introducing the composition into a lower portion of the reactor, passing the composition through the reactor in an upward direction and removing the composition from an upper portion of the reactor as described in detail in European application EP 19156210 the content of which is herein incorporated by reference.

In this context, the term *"lower portion of the reactor"* particularly refers to a position, which is between the bottom of the reactor and a position, which is about 30% upwards from the bottom of the reactor based on the total height of the reactor. The term *"upper portion of the reactor"* particularly refers to a position, which is between the top of the reactor and a position, which is about 30% downwards from the top of the reactor based on the total height of the reactor. In a particular embodiment, the composition may be introduced into the bottom of the reactor, passed through the reactor in an upward direction and removed from the top of the reactor. In a particular embodiment, the reactor is a vertical reactor.

When operating the lignin-depolymerization reactor in an up-flow mode as described above, the maximum running time of the reactor, e.g. the time until occurrence of a significant pressure drop within the reactor of about 10 bar or higher may be extended to several months even in case the reactor is fed with a composition having a dry solid content of 40 weight-% or more. This effect appears to be caused by a reduced deposition of solids within the reactor.

In specific embodiments of the present invention the reactor in step (b) is operated with a vertical temperature gradient, more particularly under conditions where a lower temperature is in the lower reactor portion and a higher temperature is in the upper reactor portion. The temperature difference between the lower reactor portion and the upper reactor portion may be between about 5°C and about 60°C, particularly between about 20°C and about 40°C. For example, the reactor may be operated at a temperature at about 220°C at the bottom and about 250°C at the top.

When operating the lignin-depolymerization reactor in an up-flow mode as described above and if a gas is present during the depolymerization reaction as described above, the gas is introduced into the bottom of the reactor, into the middle of the reactor and/or into the top of the reactor, preferably into the middle of the reactor.

The efficacy of the process may be further increased when in step (b) the reactor is flushed with an aqueous liquid, particularly with water, in suitable intervals, e.g. after an operation period of about 2 days to about 7 days.

In a specific embodiment of the invention, the process of producing bio-oil as disclosed herein further comprises adding a compatibilizer to the composition prior to, during and/or after step (b). The compatibilizer increases the homogeneity of the composition, particularly between the lignin and the solvent, thereby improving the economic feasibility of the process. Examples of compatibilizers are surfactants, preferably cationic surfactants such as quaternary ammonium salts, e.g. cetrimonium bromide (CTAB), cetylpyridinium chloride (CPC), benzalkonium chloride (BAC), benzethonium chloride (BZT), dimethyldioctadecylammonium chloride, and dioctadecyldimethylammonium bromide (DODAB). Preferably, cationic surfactants based on a tall oil fatty acid are used.

In certain embodiments, the pH of the aqueous phase after step (b) is from about 5 to about 8, particularly from about 6 to about 7. Carbonate, organic acids and/or sodium salts of organic acids, such as sodium formate or sodium acetate, present in the aqueous phase may be recovered from the aqueous phase prior to directing the aqueous phase to an evaporator, e.g. a kraft mill evaporator.

After the depolymerization reaction, the composition may be cooled in step (c) to a temperature below the boiling point of an organic extraction agent, which is added in subsequent step (d). The cooling may be performed in a condenser in which gaseous components such as CO or H₂/CO and other non-condensable gases are removed.

In a particular embodiment of the invention no step of adding an acidifying agent, e.g. H₂SO₄, is required, particularly if the depolymerization reaction in step (b) is carried out in the presence of gas such as CO or H₂/CO. As stated previously, the presence of a CO containing gas leads to an acidification of the lignin-containing composition thereby increasing protonation of the lignin and its depolymerization products and the amount of depolymerized lignin in the oil-phase.

Further, step (d) optionally comprises the addition of an organic extracting agent, which is substantially non-miscible with water. In certain embodiments, the extracting agent is a low-boiling polar and/or aromatic solvent which may have a boiling point of at least about 50°C or least about 70°C and up to about 90°C or up to about 120°C under atmospheric pressure. The low-boiling solvent may be selected from esters, ethers, ketones and alcohols, such as ethyl acetate, methyl tetrahydrofuran and isopropyl acetate or any combination thereof.

In certain embodiments, the organic extracting agent may be a lignin-derived oil, e.g. a bio-oil comprising depolymerized lignin, which has been partially hydrotreated, e.g. partially deoxygenated and desulfurized. In further particular embodiments, the extracting agent may be a rosin-containing oil, e.g. a tall oil, including fractions thereof as described above. The invention also encompasses the addition of mixtures of a low-boiling solvent, a lignin-derived oil and/or a rosin-containing oil.

Usually, the organic extracting agent is added in excess to the mass of bio-oil composition, e.g. in an amount of about 50 weight-% or more, e.g. up to about 200 weight-% based on the total weight of the bio-oil composition.

After step (d), the composition is optionally subjected to a filtering step (e) which may be carried out by passing the composition through a filtration device, e.g. a filtration device having a mesh width of about 50 µm to about 200 µm such as about 70 µm to about 100 µm.

Subsequently in step (f) a phase-separation is carried out. This phase-separation may comprise decanting the oil phase from a further phase, e.g. from an aqueous phase in a separator. The phase-separation may comprise separation the composition into an oil phase and at least one further phase, e.g. a phase comprising solids, particularly non-depolymerized lignin solids, and an aqueous phase comprising dissolved salts. These phases are withdrawn separately from the separator, thereby obtaining an oil phase comprising depolymerized lignin and the organic solvent and optionally the organic extracting agent. In certain embodiments, the phase separation may be carried out as described in WO 2017/048163 the content of which is herein incorporated by reference.

When the alkaline pH is adjusted with KOH as pH-adjusting agent in step (a), the aqueous phase obtained by phase separation in step (f) comprises dissolved K₂SO₄, which might be recovered in a further process as described below. In one embodiment of this process, the lignin-containing composition in step (a) might be a kraft lignin, e.g. lignin in a kraft black liquor composition, i.e. a black liquor composition from a kraft pulping process as described herein.

The process of the invention might then further comprise the steps of:
f1) separating the aqueous phase from the oil phase and optionally further phases,
f2) optionally filtering the aqueous phase,
f3) optionally evaporating the organic extracting agent from step (d),
f4) adding an anti-solvent to the aqueous phase,
f5) separating K₂SO₄ by filtering the phase of step f4)
f6) optionally evaporating the anti-solvent and optionally the organic extracting agent from step (d),
f7) optionally at least partially recycling the anti-solvent to step f4), and
f8) optionally at least partially recycling the organic extracting agent to step d).

The anti-solvent in this process might be an alcohol, preferably methanol, such as raw kraft mill methanol or at least partially purified kraft mill methanol, or ethanol or a mixture thereof. The ratio between the solvent and the aqueous phase in this process might be within a range of about 1:1 to about 1:4, e.g. about 1:2 to about 1:3. The solvent might be at least partially recycled and reused several times.

The K₂SO₄ obtainable or obtained by the process as described herein has a purity of at least about 80%, at least about 90%, at least about 95%, at least about 97%, at least about 99%. Alternatively, the K₂SO₄ is substantially free of impurities.

The K₂SO₄ obtainable or obtained by the process as described herein may be used as fertilizer.

Subsequently, a desalting step (g) may be carried out. This step may comprise (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material. The aqueous washing liquid may contain a metal chelator such as EDTA and/or an organic acid such as formic acid, acetic acid, citric acid, oxalic acid and any mixture thereof to bind and remove metal ions such as Na⁺, K⁺ and Ca²⁺ present in the oil phase.

In certain embodiments of the invention, the desalting in step (g) comprises (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material. This procedure results in an increased removal of undesired components such as salts from the oil phase and in an increased degree of purity of the bio-oil. The aqueous washing liquid may be at least partially recycled. For example, a larger portion of the aqueous washing liquid may be recycled along with a smaller amount of fresh and salt-lean aqueous phase.

According to step (h) an organic diluent may be added to the oil phase. In certain embodiments, the organic diluent is added in an amount of about 20 to about 100 wt-% based on the weight of the oil phase. In certain embodiments, the organic diluent is a liquid having a lower volatility than a low-boiling organic extracting agent added in step (d). For example, the organic diluent may be selected from solvents, e.g. polar and/or aromatic solvents, having a boiling temperature of more than 100°C under atmospheric pressure such as benzyl alcohol, cresol and/or terpineol including isomers thereof. In particular embodiments, the organic diluent may be selected from lignin-derived oils, and/or non-lignin-derived oils, e.g. rosin-containing oils such as tall oil including fractions thereof as described above, and/or terpene-based oils including turpentine, turpentine fractions, and/or oxygenated turpentine.

According to step (h) a mixture of an alcohol and an azeotrope-forming agent may be added to the oil phase. In certain embodiments, the mixture comprises alcohol and an azeotrope-forming agent in a ratio of about 10:90 (w/w) to about 90:10 (w/w), preferably from about 30:70 (w/w) to about 70:30 (w/w), more preferably about 50:50 (w/w). In certain embodiments, the mixture is added in an amount of about 10 wt-% to about 50 wt-%, preferably about 20 wt-% to about 40wt-% based on the weight of the oil phase.

The alcohol in the mixture may be ethanol or a lignin derived oil, e.g. a bio-oil comprising depolymerized lignin which has been partially hydrotreated, e.g. partially deoxygenated and desulfurized, preferably a partially hydrotreated bio-oil such as obtained in a process as described in PCT/EP2020/053172. The weight average molecular weight of the lignin-derived oil may be about 200 g/mol to about 2000 g/mol, preferably about 300 g/mol to about 800 g/mol.

The azeotrope-forming agent in the mixture may be an alkane or an ether with a boiling point about the same boiling point or below the boiling point of the organic solvent added in step (a) and/or step (b). For example, for the organic solvent ethyl acetate, the azeotrope-forming agent may be methyl formate, 2,2-dimethylbutane, cyclohexane, hexane, cyclopentane, 2,2,4-trimethylpentane, ethyl ether, t-butyl methyl ether, petroleum ether, e.g. petroleum ether from a biorefinery process dimethoxymethane or 4-methyl-2-pentanone as described in US 5,993,610.

Evaporation according to step (i) comprises evaporating or distilling at least a part of the organic solvent. The organic solvent may be recycled to step (a) or to step (b) after evaporation in step (i).

If an organic extracting agent was added in step (d), the organic extracting agent may be evaporated in step (i) from the oil-phase. A higher boiling diluent which has been added to the composition in step (h), will not be evaporated, but will remain with the oil phase. The organic extracting agent separated from the oil phase may be recycled to step (d). In case only a lignin-derived component or oil and/or a rosin-containing oil have been added in step (d) as an organic extracting agent, the evaporation step (i) may be omitted.

Step (j) comprises obtaining bio-oil comprising depolymerized lignin and optionally at least parts of non-evaporated organic solvent from step (a) and/or step (b) and optionally the organic extraction agent from step (d) and/or organic diluent from step (h). For example, the bio-oil obtained in step (j) may comprise about 25% (w/w), about 20% (w/w), about 15% (w/w), about 10% (w/w) or about 5% (w/w) of the of non-evaporated organic solvent from step (a) and/or step (b). Alternatively, the bio-oil obtained in step (j) may be substantially free of the non-evaporated organic solvent from step (a) and/or step (b).

The depolymerized lignin obtained in step (j) has a weight average molecular weight, which is substantially reduced compared to the weight average molecular weight of a depolymerized lignin added to the reactor in step (b). For example, the weight average molecular weight of the depolymerized lignin may be in the range of about 200 to about 2000 g/mol, e.g. about 400 to about 1200 g/mol, particularly of about 500 to about 1000 g/mol.

The resulting bio-oil obtained in step (j) may be used for different applications such as a sizing agent for the production of hydrophobic paper, or for the manufacture of lignin nanoparticles or lignin softeners for e.g. plastics, or may be further processed to a hydrocarbon product, e.g. by hydrotreatment.

Hydrotreatment may, e.g. involve a treatment in the presence of a reducing gas such as H₂ and/or CO and a hydrotreatment catalyst at an elevated temperature, e.g. at a temperature between about 200°C to about 400°C, particularly between about 270°C and about 350°C. The product resulting from the hydrotreatment is a hydrocarbon product containing only minor amounts of nitrogen, sulfur and/or oxygen, for example 0.1 weight-% or less nitrogen, 0.05 weight-% or less sulfur and 0.2 weight-% or less oxygen. A partially hydrotreated lignin oil may contain, e.g. about 0.5 wt% nitrogen, about 0.5 wt% sulfur, about 77 wt% carbon, about 7 wt% hydrogen and about 15 wt% oxygen.

Alternatively, hydrotreatment of depolymerized lignin may be carried out in at least two steps. In one embodiment a first partial hydrotreatment is carried out in a first reactor or reactor zone comprising a guard bed and a second final hydrotreatment is carried out in a second reactor or reactor zone comprising a catalyst bed as described in detail in European application EP 19156211 the content of which is herein incorporated by reference.

The hydrocarbon product obtained from the hydrotreatment may be subjected to a phase separation wherein the product is separated into a gaseous phase comprising low boiling components, a liquid hydrocarbon product phase and an aqueous phase. The liquid hydrocarbon product may be subjected to a fractionation based on the boiling temperature. An exemplary hydrotreatment procedure is described in WO 2017/078582 or in PCT/EP2020/053172, the contents of which are herein incorporated by reference.

In a preferred embodiment of the invention, the bio-oil obtained in step (j) is dried, preferably spray-dried or oven-dried thereby producing lignin powder. When the bio-oil obtained in step (j) is dried, the reaction temperature in step (b) might be kept about 50°C to about 80°C, preferably about 60°C.

The invention further relates to a lignin powder obtainable by a process as described herein and characterized by a polydispersity index (PDI) of about 1 to about 2, preferably of about 1.3 to about 1.8.

The invention further relates to a lignin powder characterized by a polydispersity index (PDI) of about 1 to about 2, preferably of about 1.3 to about 1.8.

The invention further relates to a lignin powder obtainable by a process as described herein.

In a particular embodiment the process of the invention as described above is operated continuously. Alternatively, the process of the invention may be carried out in a batch reactor.

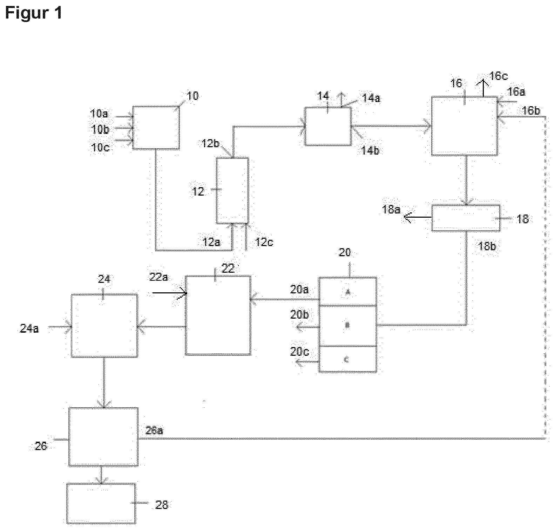

A further embodiment of the invention relates to a unit for producing bio-oil. A particular embodiment of such a unit is schematically depicted in Figure 1. The unit comprises a container (10) for providing a lignin-containing composition adapted for adding an organic solvent to the composition. For example, the container (10) may be formed as a mixing tank having several inlets (10a, 10b, 10c) for introducing the lignin-containing composition, the organic solvents and further components. The lignin-containing composition is passed from container (10) to a lignin-depolymerization reactor (12) which is operated under conditions of elevated temperature and pressure. The reactor (12) comprises an inlet (12a) for introducing the lignin-containing composition into a lower reactor portion, particularly into the reactor bottom and an outlet (12b) for removing the composition from an upper reactor portion, particularly from the top of the reactor. Further, the reactor may comprise an inlet (12c) for introducing a reducing gas such as H₂ and/or CO under pressure. Further, the reactor may comprise an inlet for introducing an organic solvent.

The composition is then transferred from the reactor (12) to a condenser (14) where the composition is cooled, e.g. below 100°C and H₂ and other non-condensable gases are withdrawn via an outlet (14a). Thereafter, the liquid portion of the composition is withdrawn through an outlet (14b) and passed to a mixing device (16) adapted for optionally adding at least one acidifying agent, e.g. by means of inlet (16a) and optionally at least one organic extracting agent, e.g. by means of inlet (16b). Gases produced in the mixing device may be removed through an outlet (16c).

The acidified composition is then passed through an optional filtration device (18). The solids are removed through an outlet (18a) and the liquid stream (18b) is passed to a phase-separator (20). In the phase-separator (20) the composition separated into individual phases, particularly into an oil phase (A) and at least one further phase, e.g. a solid-containing phase (B) and a dissolved salt-containing aqueous phase (C). The oil phase (A) comprising the depolymerized lignin and the organic extracting agent is withdrawn from the separator (20), e.g. by decanting via outlet (20a). The further phases (B, C) may be withdrawn via respective outlets (20b, 20c).

The oil phase is passed to an optional desalting device (22) for reducing the salt content thereof. Desalting may encompass the addition of an aqueous washing liquid which is added as stream (22a) followed by phase-separation and/or passing the oil phase over an adsorbent and/or an ion exchange material (not shown). The washing liquid may be recycled.

The oil phase may be passed to an optional mixing device (24) adapted for adding a high boiling organic diluent and/or a mixture of an alcohol and an azeotrope-forming agent to the composition via inlet (24a). Thereafter, the oil phase comprising the depolymerized lignin, optionally at least parts of the organic solvent and optionally the organic extracting agent and optionally the organic diluent is passed to an evaporator (26) for evaporating at least a part of low-boiling organic extracting agent comprised in the oil phase. The evaporated organic extraction agent may be withdrawn via outlet (26a) and recycled to the mixing device (16) via inlet (16b). From the evaporator (26), the oil phase may be passed to a container (28) for collecting the product which is a bio-oil comprising depolymerized lignin.

Further, the unit may comprise a hydrotreatment reactor, optionally a phase separator and optionally a fractionation device (not shown) for producing a hydrocarbon product from the bio-oil.

The present invention is further defined by the following embodiments, which are part of the specification
1. A process for producing bio-oil comprising the steps of:
   (a) providing a lignin-containing composition having an alkaline pH, e.g. a pH of about 8 to about 14 and providing an organic solvent,
   (b) passing the lignin-containing composition of step (a) through a reactor under conditions of elevated temperature and elevated pressure optionally in the presence of a gas, preferably in the presence of a gas selected from H₂, CO, CO₂, H₂S, syngas, mercaptans such as methanethiol, dimethyl sulfide, dimethyl disulfide, SO₂, methane, ethane, propane, butane and any mixture thereof, thereby causing depolymerization of the lignin, wherein a bio-oil composition comprising depolymerized lignin and the organic solvent is obtained wherein the organic solvent provided in step (a) is added in step (a) and/or in step (b),
   (c) optionally cooling the bio-oil composition and removing gaseous components therefrom,
   (d) optionally adding at least one organic extracting agent to the bio-oil composition,
   (e) optionally filtering the oil phase,
   (f) obtaining an oil phase from the bio-oil composition by phase-separation, wherein the oil phase comprises depolymerized lignin and the organic solvent and optionally the organic extracting agent,
   (g) optionally desalting the oil phase,
   (h) optionally adding an organic diluent and/or optionally adding a mixture of an alcohol and an azeotrope-forming agent to the oil phase,
   (i) evaporating or distilling at least a part of the organic solvent comprised in the oil phase and optionally evaporating the organic extracting agent comprised in the oil phase, and
   (j) obtaining a bio-oil comprising depolymerized lignin.
2. The process of embodiment 1 wherein the gas of step (b) comprises CO, particularly at least 20 vol.-% CO or at least 30 vol.-% CO.
3. The process of embodiment 1 or 2 wherein the gas of step (b) comprises H₂ and CO, preferably in a ratio between about 5:1 (v/v) to about 1:5 (v/v), particularly between about 3:1 (v/v) to about 1:3 (v/v).
4. The process of any of the preceding embodiments wherein the lignin in the lignin-containing composition of step (a) has a weight average molecular weight of greater than about 600 g/mol, preferably about 1.000 g/mol to about 10.000 g/mol, more preferably about 4.000 g/mol to about 8.000 g/mol.
5. The process of any of the preceding embodiments wherein the lignin-containing composition of step (a) comprises a Klason lignin content of about 30 g/kg to about 300 g/kg, particularly of about 100 g/kg to about 200 g/kg based on the total weight of the composition.
6. The process of any of the preceding embodiments wherein the lignin-containing composition of step (a) comprises about 1 weight-% to about 30 weight-% of lignin, preferably about 5 weight-% to about 20 weight-% lignin, more preferably about 15 weight-% lignin based on the total weight of the composition.
7. The process of any of the preceding embodiments wherein the lignin-containing composition of step (a) comprises black liquor.
8. The process of any of the preceding embodiments wherein the organic solvent is present in an amount between about 1:5 (w/w) to about 5:1 (w/w), preferably in an amount between about 1:2 (w/w) to about 2:1 (w/w), more preferably in an amount of about 1:1 (w/w) based on the total weight of the composition.
9. The process of any of the preceding embodiments further comprising adding a surfactant, preferably a cationic surfactant, to the composition prior to, during and/or after step (b).
10. The process of any of the preceding embodiments wherein the organic solvent in step (a) has a weight average molecular weight of up to about 2000 g/mol, preferably of about 50 g/mol to 500 g/mol, more preferably about 70 g/mol to about 300 g/mol, most preferably about 80 g/mol to about 150 g/mol.
11. The process of any of the preceding embodiments wherein the organic solvent is (a) a polar and/or aromatic solvent which is selected from the group consisting of an ester, an ether, a ketone, an alcohol, a cresol and combinations thereof, and /or b) a lignin-derived component.
12. The process of any of the preceding embodiments wherein the organic solvent is selected from the group consisting of benzyl alcohol, butanol, cyclohexanol, phenylethanol, hexanol, heptanol, octanol, guaiacol, butanone, methyl isobutyl ketone, methyl tert-butyl ether, petroleum ether, hexane, heptane, methyl tetrahydrofuran, ethyl acetate, isopropyl acetate, turpentine, gasoline and combinations thereof.
13. The process of any of the preceding embodiments wherein the organic solvent is a lignin-derived component, particularly depolymerized lignin or a depolymerized and partially hydrotreated lignin, e.g. partly deoxygenated and partly desulfurized lignin.
14. The process of any one of the preceding embodiments wherein at least one further component selected from a carbonium and/or arenium ion scavenger, a radical scavenger, or an oxygen atom transfer agent, a rosin containing oil and any combination thereof, is added to the lignin-containing composition of step (a), particularly in an amount up to about 100 weight-%, more particularly in an amount of about 10 weight-% to about 100 weight-%, most particularly in an amount of about 5 weight-% to about 30 weight-% based on the total Klason lignin content in the lignin-containing composition.
15. The process of any one of the preceding embodiments wherein the lignin-containing composition of step (a) has a pH of about 8 to about 14.
16. The process of any of the preceding embodiments wherein the lignin-containing composition of step (a) has an alkali weight content of about 1 weight-% to 20 weight-% alkali, preferably about 2 weight-% to about 10 weight-% alkali, and more preferably about 5 weight-% alkali based on the total weight of the composition.
17. The process of any of the preceding embodiments wherein in step (b) the reactor is kept at a temperature between about 150°C and about 370°C, preferably between about 230°C and about 290°C and a pressure between about 5 bar and about 220 bar and optionally in the presence of a catalyst, preferably a solid catalyst.
18. The process of any of the preceding embodiments wherein in step (b) depolymerization is performed in the presence of a first deoxygenation and/or cracking catalyst, preferably a solid catalyst selected from the group consisting of mesoporous carbon, hydrophobic silica, hydrophobic silica/titania mixed oxides, hydrophobic zeolite, hydrotalcite, hydroxyapatite, sepiolite and metal organic framework (MOF) doped with metals such as Ni and Mo.
19. The process of any of the preceding embodiments wherein in step (b) depolymerization is performed in the presence of a second depolymerization catalyst which is different from the first catalyst wherein the second catalyst is selected from the group consisting of an unsupported metal carbide wherein the metal is preferably a transition metal, preferably doped with another transition metal such as Ni or Mo.
20. The process of any of the preceding embodiments wherein in step (b) the reactor is operated in an up-flow mode, comprising introducing the composition into a lower portion of the reactor, passing the composition through the reactor in an upward direction and removing the composition from an upper portion of the reactor, wherein the composition is particularly introduced into the bottom of the reactor, passed through the reactor in an upward direction and removed from the top of the reactor.
21. The process of embodiment 20 wherein in step (b) the reactor is operated with a vertical temperature gradient, particularly under conditions where a lower temperature is in the lower reactor portion and a higher temperature is in the upper reactor portion.
22. The process of embodiments 20 or 21 wherein the gas is introduced into the bottom of the reactor, into the middle of the reactor and/or into the top of the reactor, preferably into the middle of the reactor.
23. The process of any of embodiments 20 to 22 wherein the temperature difference between the lower reactor portion and the upper reactor portion is between about 5°C and about 60°C, particularly between about 20°C and about 40°C.
24. The process of any of the preceding embodiments wherein in step (b) the reactor is flushed with an aqueous liquid, e.g. after an operation period of about 2 to about 7 days.
25. The process of any of the preceding embodiments wherein in step (c) the bio-oil composition is cooled below the boiling point of the organic extracting solvent which is optionally added in step (d).
26. The process of any of the preceding embodiments comprising no step of adding an acidifying agent, particularly no step of adding H₂SO₄.
27. The process of any of the preceding embodiments wherein the pH of the aqueous phase after step (b) is from about 5 to about 8, particularly from about 6 to about 7.
28. The process of any of the preceding embodiments wherein the organic extracting agent, which is optionally added in step (d) is substantially non-miscible with water.
29. The process of any of the preceding embodiments wherein the organic extracting agent ,which is optionally added in step (d) is a low-boiling organic solvent, particularly selected from esters, ethers, ketones and alcohols, e.g. ethyl acetate, methyl tetrahydrofuran, isopropyl acetate and any combination thereof.
30. The process of any of the preceding embodiments wherein the organic extracting agent, which is optionally added in step (d) is added in excess to the total mass of the composition.
31. The process of any of the preceding embodiments wherein in step (e) the composition is passed through a filtration device having a mesh width of about 50 µm to about 200 µm.
32. The process of any of the preceding embodiments wherein the phase-separation in step (f) comprises separating the bio-oil composition into an oil phase and at least one further phase and decanting the oil phase from the further phase.
33. The process of any of the preceding embodiments wherein the phase-separation in step (f) comprises separating the bio-oil composition into an oil phase, and at least one further phase, e.g. a first phase comprising solids, particularly non-depolymerized lignin solids, and a second aqueous phase comprising dissolved salts.
34. The process of any one of the preceding embodiments wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.
35. The process of embodiment 34 wherein desalting in step (g) comprises (i) contacting the oil phase with an aqueous washing liquid and carrying out a phase-separation wherein the resulting mixture is separated into an oil phase and at least one aqueous phase, and subsequently (ii) contacting the composition with an adsorbent and/or an ion exchange material, wherein the aqueous washing liquid may comprise a metal chelator and/or an organic acid.
36. The process of embodiment 34 or 35 wherein the aqueous washing liquid is at least partially recycled.
37. The process of any of the preceding embodiments wherein the organic diluent which is optionally added in step (h) is a liquid having a higher boiling point than a low-boiling extracting agent which is optionally added in step (d).
38. The process of embodiment 37 wherein the organic diluent added in step (d) is selected from benzyl alcohol, cresol, terpineol including isomers thereof, a lignin-derived oil or any combination thereof.
39. The process of any of the preceding embodiments wherein the organic extracting agent is recycled to step (d) after evaporation in step (i).
40. The process of any of the preceding embodiments wherein the organic solvent is recycled to step (a) after evaporation in step (i).
41. The process of any of the preceding embodiments wherein the depolymerized lignin obtained in step (j) has an average molecular weight of about 200 to about 2000 g/mol, particularly of about 400 to about 1200 g/mol, more particularly of 500 to about 1000 g/mol.
42. The process of any of the preceding embodiments wherein the bio-oil obtained in step (j) is dried, preferably by spray drying or oven drying.
43. The process of any of the preceding embodiments wherein the bio-oil obtained in step (j) is further processed to a hydrocarbon product.
44. The process of any one of the preceding embodiments wherein the bio-oil is subjected to hydrotreatment.
45. The process of embodiment 44 wherein the hydrotreatment comprises a treatment in the presence of a reducing gas such as H₂ and/or CO and a hydrotreatment catalyst at a temperature between about 220°C to about 400°C, particularly between about 270°C and about 350°C.
46. The process of any one of embodiments 43 to 45 wherein the hydrocarbon product obtained from the hydrotreatment is subjected to a phase-separation wherein the product is separated into a gaseous phase, a liquid hydrocarbon product phase and an aqueous phase.
47. The process of embodiment 46 wherein the liquid hydrocarbon product is subjected to a fractionation.
48. The process of any one of the preceding embodiments, which is operated continuously.
49. A unit for producing bio-oil comprising:
   (a) a first container for providing a lignin-containing composition having an alkaline pH, wherein said first container is further adapted for adding at least one organic solvent to the composition,
   (b) a reactor adapted for operation under conditions of elevated temperature and elevated pressure and for producing a bio-oil composition comprising depolymerized lignin,
      wherein the reactor is preferably adapted for operation in an up-flow mode, and comprises an inlet for introducing the lignin-containing composition from the container (a) into a lower reactor portion, and an outlet for removing the bio-oil composition from an upper reactor portion and wherein the reactor is further adapted for adding at least one organic solvent to the composition,
   (c) optionally a condenser adapted for cooling the bio-oil composition from the reactor (b) and for removing gaseous components therefrom,
   (d) optionally a mixing device adapted for adding at least one organic extracting agent to the composition from the reactor (b) or the condenser (c), if present,
   (e) optionally a filtration device adapted for filtering the oil phase from the mixing device (d),
   (f) a separator adapted for obtaining an oil phase from the bio-oil composition by phase separation, wherein the oil phase comprises depolymerized lignin and optionally an organic extracting agent,
   (g) optionally a desalting device adapted for desalting the oil phase from the separator (f),
   (h) optionally a mixing device adapted for adding an organic diluent and/or a mixture of an alcohol and an azeotrope-forming agent to the oil phase from the separator (f),
   (i) an evaporator adapted for evaporating the organic solvent in the oil phase, if present, and optionally the extracting agent comprised in the oil phase from the separator (f), and optionally recycling the evaporated organic solvent to the mixing device of step (a) and, optionally the evaporated organic extracting agent to mixing device (d), and
   (j) optionally a container for collecting a bio-oil comprising depolymerized lignin.
50. A unit for producing a hydrocarbon product comprising the unit of embodiment 49 and further comprising:
   (a) a hydrotreatment reactor,
   (b) optionally a phase-separator, and
   (c) optionally a fractionation device.
51. A lignin powder obtainable by a process according to any one of the embodiments 1 to 48.
52. A lignin powder obtainable by a process according to any one of the embodiments 1 to 48 and characterized by a polydispersity index (PDI) of about 1 to about 2, preferably of about 1.3 to about 1.8.
53. A lignin powder characterized by a polydispersity index (PDI) of about 1 to about 2, preferably of about 1.3 to about 1.8.

### Examples

### Example 1

100 g black liquor (44 wt-% solids) and 100 g solvent benzyl alcohol were added to a batch reactor with vigorous mechanical stirring at 267 rpm. A head pressure of 15 bar syngas (67% CO in H₂) was applied and the reactor was heated to 290 °C. The residence time at 290 °C was 30 minutes followed by stirred cooling to 70 °C when gaseous and liquid products were emptied. No char was observed at the bottom of the reactor.

Instant phase separation of the solvent and black liquor phase was observed where the majority of the lignin-derived material was present within the solvent phase and where the acid soluble lignin was present in the bottom aqueous black liquor phase having a pH of 7.6.

### Example 2

100 g lab made black liquor (containing 14 wt-% lignin powder in 1.7 wt-% NaOH) and 100 g solvent benzyl alcohol were added to a batch reactor with vigorous mechanical stirring at 267 rpm. A head pressure of 15 bar syngas (67% CO in H₂) was applied and the reactor was heated to 290 °C. The residence time at 290 °C was 30 minutes followed by stirred cooling to 70 °C when gaseous and liquid products were emptied. No char was observed at the bottom of the reactor.

Instant phase separation of the solvent and black liquor phase was observed where the majority of the lignin-derived material was present within the solvent phase and where the acid soluble lignin was present in the top aqueous black liquor phase having a pH of 6.5.

### Example 3

100 g lab made black liquor (containing 14 wt-% lignin powder in 1.7 wt-% NaOH) and 100 g solvent benzyl alcohol were added to a batch reactor with vigorous mechanical stirring at 267 rpm. A head pressure of 15 bar CO₂ was applied and the reactor was heated to 290 °C. The residence time at 290 °C was 30 minutes followed by stirred cooling to 70 °C when gaseous and liquid products were emptied. No char was observed at the bottom of the reactor.

Instant phase separation of the solvent and black liquor phase was observed where the majority of the lignin-derived material was present within the solvent phase and where the acid soluble lignin was present in the top aqueous black liquor phase having a pH of 7.7.

### Example 4

200 g black liquor (22 wt-% solids) was heated to 250 °C and kept at 250 °C for 1 hr during stirring. The 300 ml reactor was cooled down to 50 °C and opened to add 0.8 g NaOH and 11.7 g crude tall oil (CTO) (0.6:1 CTO:Klason lignin content). The reactor was closed and flushed with nitrogen prior adding a head pressure of 50 bar CO. The reactor was heated to 270 °C and kept at 270 °C for 1 hr. The reactor was cooled down to 50 °C when gaseous and liquid products were emptied.

Instant phase separation of the CTO and black liquor phase was observed where the majority of the lignin-derived material was present within the CTO phase and where the acid soluble lignin was present in the bottom aqueous black liquor phase having a pH of 7.9. The organic top phase, which was homogenous without any additional fancy catalyst or additive, was easily removed from the aqueous phase for further processing.

### Example 5

200 g black liquor (22 wt-% solids) was heated to 250 °C and kept at 250 °C for 1 hr during stirring. The 300 ml reactor was cooled down to 50 °C and opened to add 0.8 g NaOH and 15 g rosin (0.8:1 rosin:Klason lignin content). The reactor was closed and flushed with nitrogen prior adding a head pressure of 50 bar CO. The reactor was heated to 270 °C and kept at 270 °C for 1 hr. The reactor was cooled down to 68 °C when gaseous and liquid products were emptied.

Instant phase separation of the rosin and black liquor phase was observed where the majority of the lignin-derived material was present within the rosin phase and where the acid soluble lignin was present in the top aqueous black liquor phase having a pH of 8.1.

### Example 6

The molecular weight distribution between the inventive oven-dried bio-oil was compared to a commercial softwood kraft lignin from a LignoBoost^{™} process according to the values in the table below. The molecular weight distribution is represented by the Polydispersity index (PDI) which is calculated by the weight average molecular weight and the number average molecular weight, PDI= Mw/Mn. The number average molecular weight is calculated by dividing the total weight of the sample by the total number of the molecules.

**Table 1**

| | Polydispersity index Weight average (PDI) molecular weight, Mw | |
|---|---|---|
| Oven-dried bio-oil of the invention | 1.3-1.8 | about 1000 |
| Commercial lignin from softwood kraft lignin | 4.5-5 | about 4500 |

### Example 7

11.8 g NaOH was dissolved in 150 g deionized water. Following this, 30.5 g lignin powder was dissolved in the alkaline water during stirring. This provides an alkaline lignin containing composition with 15 wt% lignin and 6 wt% NaOH. The lignin containing composition was stirred and heated to 270 °C which takes 1 hr and then kept at 270 °C for 1hr. The reactor was cooled down and the lignin containing composition was acidified using concentrated (95%-97%) sulfuric acid. The lignin containing solution and acid was both pumped to a beaker to where liquids were mixed by mechanical stirring. The pH of the mixture was kept constant at 4.5.

After acidification, 500 ml ethyl acetate was added to the mixture and vigorously stirred for 3 minutes prior allowing the mixture to settle and phase separate. The phase separation results in a 3-phase separation with solvent and lignin oil on top and a solid middle phase and the water phase at the bottom of the beaker.

The solvent phase (including the lignin oil) on top of water was decanted off the beaker and solvent was recovered at 30 °C and 100 mbar giving a final lignin oil. Lignin oil yield was 76%.

The middle solid phase was filtered and dried in an oven at 105 °C overnight giving 7 g solids containing 13 % ash.

### Example 8

20.3 g NaOH was dissolved in 200 g deionized water. Following this, 20.4 g hydrolysis lignin powder was dissolved in the alkaline water during stirring. This provides an alkaline lignin containing composition with 7.9 wt% lignin and 8.4 wt% NaOH. The lignin containing composition was stirred and heated to 230 °C and kept at 230 °C for 40 minutes.

The reactor was cooled down and the lignin containing composition was acidified using concentrated (95%-97%) sulfuric acid. The lignin containing composition and acid was both pumped to a beaker to where liquids were mixed by mechanical stirring. The pH of the mixture was kept constant at 4.5. No foaming was observed during acidification which is an advantage for hydrolysis lignin and the acid consumption was 55 ml/kg black liquor.

After acidification, 600 ml ethyl acetate was added to the mixture and vigorously stirred for 3 minutes prior allowing the mixture to settle and phase separate.

The solvent phase (including the lignin oil) on top of water was decanted off the beaker and solvent was recovered at 30 °C and 100 mbar giving a final lignin oil at 45% yield.

### Example 9

200 g black liquor based on 50/50 softwood/hardwood stirred and heated to 230 °C and kept at 230 °C for 1 hr. The reactor was cooled down and the lignin containing composition was acidified using concentrated (95%-97%) sulfuric acid. The lignin containing composition and acid was both pumped to a beaker to where liquids were mixed by mechanical stirring. The pH of the mixture was kept constant at 4.5.

After acidification, 400 ml ethyl acetate was added to the mixture and vigorously stirred for 3 minutes prior allowing the mixture to settle and phase separate.

The solvent phase (including the lignin oil) on top of water was decanted off the beaker and solvent was recovered at 30 °C and 100 mbar giving a final lignin oil at 36% yield. The lignin oil viscosity is lower than the lignin oil obtained from using only softwood, which makes this lignin oil a good viscosity modifier when blending with a lignin oil obtained from using softwood only as it provides a lower viscosity overall, hence improved processability.

### Example 10

Example 10 corresponds to Example 7 except for using KOH instead of NaOH as pH-adjusting agent.

11.8 g KOH was dissolved in 150 g deionized water. Following this, 30.5 g lignin powder was dissolved in the alkaline water during stirring. This provides an alkaline lignin containing composition with 15 wt% lignin and 6 wt% KOH. The lignin containing composition was stirred and heated to 250 °C, which takes 50 minutes and then kept at 250 °C for 1 hr. The reactor was cooled down and the lignin containing composition was acidified using concentrated (95%-97%) sulfuric acid. The lignin containing composition and acid was both pumped to a beaker to where liquids were mixed by mechanical stirring. The pH of the mixture was kept constant at 4.5.

After acidification, 500 ml ethyl acetate was added to the mixture and vigorously stirred for 3 minutes prior allowing the mixture to settle and phase separate. The phase separation results in a 3-phase separation with solvent and lignin oil on top and a solid middle phase, which was filtered off enabling a 2-phase separation of lignin oil/solvent and water.

The solvent phase (including the lignin oil) on top of water was decanted off the beaker and solvent was recovered at 30 °C and 100 mbar giving a final lignin oil. Lignin oil yield was 78%.

The filtered lignin solids was dried in an oven at 105 °C overnight giving 6.5 g solids containing 11 % ash.

The filtered water phase was evaporated to recover dissolved ethyl acetate. 40 g of the resulting water phase containing dissolved K₂SO₄ was processed further by adding an anti-solvent like methanol or ethanol to precipitate K₂SO₄. This gave 2 g dry K₂SO₄ with high purity, 99% using methanol and 97% using ethanol. The alcohol within the filtrated liquid was recovered by evaporation enabling recirculation of alcohol.

## Claims

1. A process for producing bio-oil comprising the steps of:
(a) providing a lignin-containing composition having an alkaline pH, e.g. a pH of about 8 to about 14 and providing an organic solvent
(b) passing the lignin-containing composition of step (a) through a reactor under conditions of elevated temperature and elevated pressure optionally in the presence of a gas, preferably in the presence of a gas selected from H₂, CO, CO₂, H₂S, syngas, mercaptans such as methanethiol, dimethyl sulfide, dimethyl disulfide, SO₂, methane, ethane, propane, butane and any mixture thereof, thereby causing depolymerization of the lignin, wherein a bio-oil composition comprising depolymerized lignin and the organic solvent is obtained wherein the organic solvent provided in step (a) is added in step (a) and/or in step (b),
(c) optionally cooling the bio-oil composition and removing gaseous components therefrom,
(d) optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and the organic solvent and optionally the organic extracting agent,
(g) optionally desalting the oil phase,
(h) optionally adding an organic diluent and/or optionally adding a mixture of an alcohol and an azeotrope-forming agent to the oil phase,
(i) evaporating or distilling at least a part of the organic solvent comprised in the oil phase and optionally evaporating the organic extracting agent comprised in the oil phase, and
(j) obtaining a bio-oil comprising depolymerized lignin.

2. The process of claim 1 wherein the gas of step (b) comprises at least 20 vol-% CO.

3. The process of claim 1 or 2 wherein the gas of step (b) comprises H₂ and CO, preferably in a ratio between about 5:1 (v/v) to about 1:5 (v/v), particularly between about 3:1 (v/v) to about 1:3 (v/v).

4. The process of any of the preceding claims wherein the organic solvent is present in an amount between about 1:10 (w/w) to about 10:1 (w/w), preferably in an amount between about 1:5 (w/w) to about 5:1 (w/w), more preferably in an amount between about 1:2 (w/w) to about 2:1 (w/w), most preferably in an amount of about 1:1 (w/w) based on the total weight of the composition.

5. The process of any of the preceding claims further comprising adding a surfactant, preferably a cationic surfactant, to the composition prior to, during and/or after step (b).

6. The process of any of the preceding claims wherein the organic solvent in step (a) has a weight average molecular weight of up to about 2000 g/mol, preferably of about 50 g/mol to 500 g/mol, more preferably about 70 g/mol to about 300 g/mol, most preferably about 80 g/mol to about 150 g/mol.

7. The process of any of the preceding claims wherein the organic solvent is (a) a polar and/or aromatic solvent which is selected from the group consisting of an ester, an ether, a ketone, an alcohol, a cresol , a carboxylic acid and combinations thereof, particularly selected from the group consisting of benzyl alcohol, butanol, cyclohexanol, phenylethanol, hexanol, heptanol, octanol, guaiacol, butanone, methyl isobutyl ketone, methyl tert-butyl ether, petroleum ether, hexane, heptane, methyl tetrahydrofuran, ethyl acetate, isopropyl acetate, turpentine, gasoline, and combinations thereof, and/or (b) a lignin-derived component.

8. The process of any of the preceding claims wherein the organic solvent is a lignin-derived component, particularly a depolymerized lignin or a depolymerized and partially hydrotreated lignin, e.g. partly deoxygenated and partly desulfurized lignin.

9. The process of any of the preceding claims wherein in step (b) the reactor is kept at a temperature between about 150°C and about 370°C, preferably between about 230°C and about 290°C and a pressure between about 5 bar and about 220 bar and optionally in the presence of a catalyst, preferably a solid catalyst.

10. The process of any of the preceding claims wherein in step (b) depolymerization is performed in the presence of a first deoxygenation and/or cracking catalyst, preferably a solid catalyst selected from the group consisting of mesoporous carbon, hydrophobic silica, hydrophobic silica/titania mixed oxides, hydrophobic zeolite, hydrotalcite, hydroxyapatite, sepiolite and metal organic framework (MOF) doped with metals such as Ni and Mo, and optionally in the presence of a second depolymerization catalyst which is different from the first catalyst wherein the second catalyst is an unsupported metal carbide, wherein the metal is preferably a transition metal, preferably doped with another transition metal such as Ni or Mo.

11. The process of any of the preceding claims comprising no step of adding an acidifying agent, particularly no H₂SO₄.

12. The process of any of the preceding claims wherein the pH of the aqueous phase after step (b) is from about 5 to about 8, particularly from about 6 to about 7.

13. The process of any of the preceding claims wherein the organic solvent is recycled to step (a) after evaporation in step (i).

14. The process of any of the preceding claims wherein the depolymerized lignin obtained in step (j) has an average molecular weight of about 200 to about 2000 g/mol, particularly of about 400 to about 1200 g/mol, more particularly of 500 to about 1000 g/mol.

15. A lignin powder obtainable by a process according to any one of claims 1 to14, preferably **characterized by** a polydispersity index (PDI) of about 1 to about 2, preferably of about 1.3 to about 1.8.
